# EUROPEAN PATENT APPLICATION

(11) **EP 4 696 659 A1**
(43) Date of publication of application: **18.02.2026**
(21) Application number: 25382843.8
(22) Date of filing: 06.08.2025
(51) Int. Cl.: C02F 1/28, A01K 1/01, C02F 1/42, C02F 101/16, C02F 103/20

(54) **SLURRY FILTERING DEVICE**

(30) Priority: 13.08.2024 ES 202430674
(71) Applicant: Servicios Tecnológicos de Saneamiento y Depuración S.L., 50004 Zaragoza (ES)
(72) Inventor: Naudin Martínez, Jesús Ángel, 50012 Zaragoza (ES); Castillo Mendoza, Juan Antonio, 12540 Villarreal, Castellón (ES); Pastor Alcañiz, Laura, 46110 Godella ( Valencia) (ES)
(74) Representative: Herrero & Asociados, S.L.

(57) **Abstract**

The present invention relates to the field of agricultural waste management, specifically in the slurry processing and filtering. The slurry filtering device is characterised by the automated loading and regeneration of zeolite filters. It includes a zeolite conveying and recirculating system, an ion exchanger and an automated control unit. This system enables an efficient slurry processing, improving the quality of filtered water and optimising the use of energy resources. The control unit automatically sets the speed and temperature of the conveyor/drying belt and the flow rate to be processed, enabling a remote operation and adapting to the environmental and energy supply conditions. This invention offers an advanced and automated solution for a sustainable management of slurry in the agricultural sector.

## Description

### FIELD OF THE INVENTION

The invention relates to industrial techniques pertaining to the livestock sector.

### BACKGROUND OF THE INVENTION

During the last years, the increase and intensification of livestock farming in general, and pig farming in particular, has led to a corresponding increase in the by-products generated by these activities, without it being possible to use/absorb them in the available agricultural land and without the use of manures as a compost having implied a decrease in the demand for synthetic nitrogenous fertilisers.

In view of this situation, both European Union and national legislation require livestock farms to certify that they have adequate manure management systems to ensure the sustainability of the livestock sector by promoting the rational use of manure as a fertiliser.

At the same time, the scarcity of water resources fully justifies the adoption of systems for managing slurry which, apart from being environmentally friendly and economically viable, provide available water. One of the most important advantages that are obtained by managing slurry sustainably is that slurry recovery prevails before its disposal. This is so recommended by the EU Waste policy within its waste management hierarchy, which recommends that every potentially recyclable or recoverable waste be destined to these purposes. Thus, a suitable alternative may be the re-utilisation of the liquid fraction within the farm itself, either for irrigation or cleaning.

The main problem relating to livestock waste, and in particular of slurry, is the concentration of its production in certain geographical areas, which exceeds the environment's capacity to take it. The excessive application of livestock waste to the soil contributes to water contamination, both surface water and groundwater, due to the high presence of nutrients and pathogenic organisms in them [Campos, E. (2001). Optimisation of Anaerobic Digestion of Pig Slurry by its Co-Digestion with Organic Waste from the Agri-Food Industry. Dissertation. Universidad de Lleida. 371 pp*.*], which may cause a detriment to the quality of water for human consumption, especially due to excessive nitrate amounts [Hernández, D. (2006). Utilisation of Pig Slurry as an Organic Amendment in Degraded Soils: Agronomic and Environmental Assessment. Dissertation. Universidad Autónoma de Madrid. 257 pp.]*.*

In addition, the high presence of nutrients contributes to the soil contamination due to their accumulation and the unbalances caused among these elements. It is also important to highlight the effects on the atmosphere, such as the production of unpleasant odours, which often affect the surrounding population, gaseous emissions of NH₃, SH₂, NO_{X} and volatile organic compounds, which contribute to acid rain and the greenhouse effect and, in a significant manner, the generation of methane, one of the most important gases in relation to climate change. Finally, it is to be noted that pig slurry contains diverse pathogenic organisms that may be transmitted to humans through water or the atmosphere [Bicudo, J.R., Goyal, S.M. (2003). Pathogens and manure management systems - a review. Environmental Technology, 24(1), pp.115-130*].*

However, it is important to highlight that the slurry is highly valued in agronomic terms due to its composition, rich in essential nutrients for plants such as nitrogen (N), phosphorus (P) and potassium (K), while providing secondary nutrients (calcium, magnesium, sodium, sulphur) and micronutrients (iron, manganese, etc.).

The utilisation of these faeces as a fertiliser probably is the most employed solution since it requires low-cost investments and provides the highest economic benefits, considering the growing prices of mineral fertilisers. However, although pig effluents are an excellent source of nutrients for crop production systems in agriculture, horticulture and forestry, there are limitations to their use in terms of storage, transport and application of large quantities. There are geographical areas of intensive livestock production in which the crops cannot absorb all the nutrients generated by this industry. This fact gives rise to local surpluses, which makes the application of technologies to manure processing necessary in order to improve the management of nutrients. If both agronomic bases [Teira, M.R., Flotats, X. (2003). A method for livestock waste management planning in NE Spain. Waste Management. 23(10) pp. 917-932] and legal limitations are taken into account [EEC (1991). Council Directive, of 21 May 1991, concerning urban waste-water treatment], the most usual criterion when planning the application of manure to the soil is the nitrogen content. If needed, the sufficient supply of other nutrients will be then guaranteed by complementary fertilisation sources.

Within a circular economy as currently proposed, the recovery of nutrients and organic matter from slurry for use in soil could contribute to reducing the production of inorganic fertilisers, with the associated advantages that this would bring: reduction in the extraction of P (a non-renewable resource), reduction in the Haber Bosch process for nitrogen production, etc.

Contrary to phosphorus, N can be considered to be a renewable resource but its conversion into a fertiliser by means of the Haber-Bosch process requires a high amount of energy, with its costs depending on gas natural price and supply. The Haber-Bosch process is the largest contributor to the production and release of anthropogenic reactive N, which over the last two centuries has altered the natural geochemical cycle of natural N, affecting the well-being of the planet by causing ocean acidification, ozone depletion and eutrophication. The modification of the natural N cycle in synergy with the transgression of other recognised planetary boundaries is likely to cause irreversible environmental changes. In this context, it is important to promote different approaches to biological nitrification-denitrification for the treatment of wastewater with high NH₄⁺ loads and to foster technologies that allow it to be recovered and re-utilised.

Among the methods for NH₄⁺ removal, the nitrification-denitrification biological process is the most widely employed. Nevertheless, biological processes are not suitable for waste-water characterised by large NH₄⁺ amounts and fluctuations. In these cases, other alternatives such as precipitation, air extraction and ion exchange, need to be considered. In addition, biological processes remove but do not recover NH₄⁺, which degrades into N₂ and is released to the atmosphere as a non-reactive N. Therefore, NH₄⁺ contained in waste-water is not recovered efficiently and reused for other purposes such as the agricultural application.

Furthermore, biological systems show lower efficiencies when subjected to flow and composition fluctuations, fluctuations related to production cycles, start-up periods due to production stoppages, and low temperatures. Due to these limitations, it is plausible to integrate biological system with physicochemical technologies (such as ammonia stripping, clay addition and struvite precipitation) to guarantee the expected efficiency of the nitrogen removal [De Vrieze, J., Colica, G., Pintucci, C., Sarli, J., Pedizzi, C., Willeghems, G:., et al. (2019) Resource recovery from pig manure via an integrated approach: a technical and economic assessment for full-scale applications. Bioresour Technol 272, pp. 582-593]. As a consequence, the physicochemical technologies can be applied in crofts where lower operational costs are offset by a higher capital investment and complexity of the process of the biological systems.

In addition to physicochemical processes and aerobic processes for the removal of organic matter and nitrogen, anaerobic digestion of slurry, either alone or in co-digestion with other waste, is a technology currently employed.

Anaerobic digestion is a technology applied to the processing of slurry and other agroindustrial waste, given its proven operational reliability and the obtainment of methane as a source of renewable energy, which generally allows the initial investment costs to be amortised [Ren Y, Yu M, Wu C, Wang Q, Gao M, Huang Q, Liu Y. (2018) A comprehensive review on food waste anaerobic digestion: Research updates and tendencies. Bioresour Technol; 247: pp. 1069-1076]*.* However, it has the drawback of generating an effluent (digestate) that has a high amount of solids and nutrients (N and P) not meeting the characteristics required by the applicable regulations for direct discharge into watercourses. During anaerobic digestion, hydrolysis occurs and organic matter, ammonia, phosphate, potassium, magnesium, calcium and sulphur are released into the bulk liquid. Organic matter is mainly converted into methane, while both ammonia and phosphate are not consumed during the process [Mai, D.T, Kunacheva, C., Stuckey, D.C. (2018). A review of posttreatment technologies for anaerobic effluents for discharge and recycling of wastewater. Crit. Rev. Environ. Sci. Technol. 48, pp. 167-209]*.* Phosphate is a key compound in fertilisers and its annual demand is increasing as the world population grows.

The application of slurry processing systems on the farm itself is not a currently widespread practice. However, it is fully justified when there is insufficient agricultural land available for direct application of slurry, which is currently the most widely used slurry management system. Keeping this in mind and, therefore, the low implementation of slurry processing systems as such, we will now go on to mention the technologies currently utilised.

In slurry processing, there are two approaches: comprehensive treatments, which aim to comply with the regulations on discharge into watercourses in the processed effluent, or a complete evaporation of the liquid fraction of the slurry. There are intermediate treatments as well, the objectives of which are to reduce the load, change the characteristics of the slurry to adapt its composition and volume to the agricultural area available to the farmer, or reduce the inconveniences caused by unpleasant odours.

The alternatives currently available on the market are based on a series of basic treatments:
- Solid-liquid separation. This is an intermediate treatment and constitutes an improvement for subsequent treatments, but it cannot be the only treatment element since it does not provide an efficient reduction of pollutants, due to the fact that it only divides them into phases for a better management, but not treatment.
- Composting. This allows just the solid fraction of the slurry to be processed. Therefore, a liquid fraction remains unprocessed.
- Nitrification-denitrification. This is a highly energy consuming treatment, which does not allow other resources such as organic matter or nutrients to be recovered.
- Anaerobic digestion. It has the advantage of producing methane that can be employed as an energy source, but the resulting product (digestate) requires further processing.
- Evaporation and drying. These are highly energy consuming processes.
- Membrane filtration. Filtering processes are able to remove a large part of contamination, but not ammonium, in several stages. However, it could be possible to have a nutrient highly concentrated stream, which could be employed as a fertiliser.
- Stripping and absorption. It consists in stripping ammonium in the form of ammonia and recovering it as ammonium sulphate, by absorbing the ammonia produced in an acid stream of sulphuric acid.

There are also technologies associated with trademarks on the market, which, despite offering a considerable efficiency in treatments and advantages, have not experienced a clear market penetration. This is the case of electrocoagulation and electrooxidation. The electrochemical treatment consists in removing pollutants by means of a direct electrooxidation to obtain tertiary quality water for its use in fertigation or evaporation.

In this case, nitrogen is not recovered as proposed herein, but it is converted into its less polluting oxidised forms. The main bottleneck existing in these systems is the maintenance of the electrodes, which have a short life span when dealing with currents such as slurry.

From among all the technologies discussed, only the membranes and stripping would allow nitrogen to be recovered for subsequent use as a fertiliser.

The main advantage of the technology proposed here is its low installation and maintenance costs, ease of use, and the high nitrogen recovery yields that can be achieved, all without the need to add any chemical reagents or replace consumable elements over time, apart from the main consumable that is transformed into the product itself.

It should be taken into account that applying an intermediate treatment does not finish the slurry processing cycle and would be deemed to be just a treatment to alleviate the inconveniences caused. As discussed above, most of the farms are on this level of treatment.

The technology presented here would allow an encompassing slurry processing to be implemented, as it can be easily applied on farms and could complement solid fraction treatments, as well as achieve values of discharge into watercourses for the liquid fraction. All of them have the additional advantage of the recovery of a nutrient such as nitrogen.

The applicant does not know any technical solutions solving the explained problem in an advantageous manner, as it is the case of the claimed invention.

### DESCRIPTION OF THE INVENTION

The object of the invention is to allow the recovery of nutrients, mainly N and K, to achieve very low (even zero) ammonium values in the stream to be processed, to avoid the addition of reagents, and to reduce working temperatures in order to increase the capacity of zeolite compared to current techniques, which may reach 200 °C to obtain a slow-release ammonium fertiliser by this being adsorbed onto the zeolite base, although the invention can be applied to other absorption materials. Another object of the invention consists in reducing the time of exposure to the atmosphere and, therefore, the ammonia emissions from the slurry when being collected directly in the basin. A further object of the invention is to provide a fully automated system that facilitates the loading and discharging of the adsorbent material as well as its regeneration.

The device is preferably applied in slurry processing, although other applications are possible such as wastewater refinement treatments or water treatments for irrigation on golf courses. To this, the device primarily has a basin that collects the slurry coming from the farm, a solid/liquid separator, the separate fractions from which are transferred into a solid matter reservoir and a silo respectively. It has automated means for loading and discharging at least two zeolite filters having two opening and closing valves at their ends, a zeolite container, the zeolite being conveyed by a zeolite loading worm up to a second filter loading worm, wherein the filter loading worm is located above the filters and connected by means of the top valves for opening and closing them, the filter loading worm having a recirculating pipe downstream of the last filter for the surplus zeolite that has overflowed after the filters have been filled or has accumulated in the worm itself, wherein said surplus falls onto a conveyor/air heating belt within the range 50-70 °C, onto which the filters discharge as well, since these are arranged above the belt, by opening their lower valve.

Furthermore, the device comprises a third worm named hereinafter a discharging and recirculating worm that collects the material coming from the belt up to the zeolite container. The filtering occurs by means of at least two zeolite filters, an ion exchanger installed between the outlet of the upstream closest zeolite filter and the inlet of the downstream closest filter, the filters having inlet pipes, located close to the filter base, and outlet pipes, located close to their top portion.

It comprises a control unit allowing the device to be automated according to the energy demand and price as well as the signals from the water quality monitoring sensors to be interpreted, these being a pH, temperature, conductivity and ammonium/nitrate sensor, this also allowing the speed and temperature of the conveyor/drying belt to be controlled according to the characteristics of the slurry, as well as means for an automated opening and closing and a remote operation of the valves of the filters.

Some versions have been provided where it is possible to operate the filters independently due to their having opening and closing valves in their inlet and outlet pipes, not represented, located at their top and lower ends, as well as a separate feed inlet into their slurry feed pipes, which allows the arrangement to be adjusted according to the needs and the maintenance tasks to be facilitated since the device does not need to be stopped.

### BRIEF DESCRIPTION OF THE DRAWINGS

To complement the above description and for a better understanding of the features of the invention, a set of drawings is attached as an integral part of said description, in which the following is represented in an illustrative and non-limiting manner:

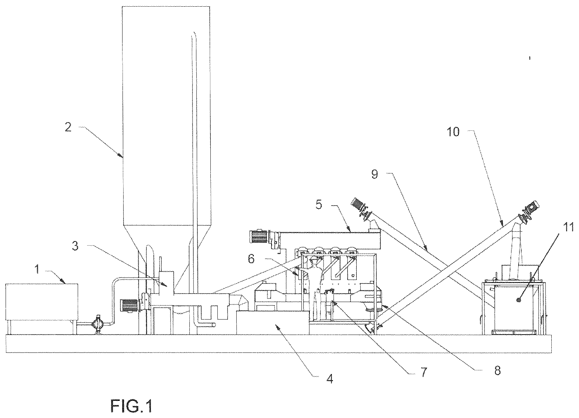

Figure 1.- shows a perspective view of the device of the invention, in which it can be observed: the basin (1), the silo (2), the solid/liquid separator (3), the solid matter reservoir (4), the zeolite filters (6), the ion exchange filter (7), the zeolite filters' loading worm (5), the zeolite loading worm (9), the conveyor/drying belt (8), the discharging and recirculating worm (10) and the zeolite container (11).

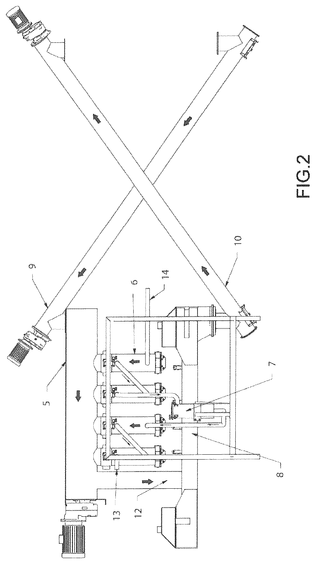

Figure 2.- shows a front view of the device of the invention from figure 1, in which a portion of the drawing has been enlarged for a better illustration, where it can be observed: the zeolite loading worm (9), the zeolite filters' loading worm (5), the zeolite recirculating pipe (12), the zeolite filters (6), the ion exchanger filter (7), the slurry feed pipe (14) into the filters, the filtered slurry outlet pipe (13), the conveyor/drying belt (8) and the discharging and recirculating worm (10); it can be also seen how the filters are connected as well as the arrows representing the direction of the fluid circulation.

### PREFERRED EMBODIMENT OF THE INVENTION

A preferred embodiment is described as an example, this being independent of the object of the invention, the materials employed for its manufacture as well as the methods of application and all secondary details that may arise, provided that they do not affect its essential aspects.

The device described in this embodiment comprises:
A basin (1), a silo (2), a solid/liquid separator (3), a solid matter reservoir (4), zeolite filters (6), an ion exchanger (7), the zeolite filters' loading worm (5), the zeolite loading worm (9), the conveyor/drying belt (8), the discharging and recirculating worm (10) and the zeolite container (11).

In this example, it comprises four zeolite filters (6), two of them being arranged first in the flowing direction and, after them, an ion exchanger (7) being arranged, the inlet of which is connected to the outlet of the second filter and the outlet of which is connected to the inlet of the third filter. Again, the outlet of the third filter is connected to the inlet of the fourth filter and the outlet of this fourth filter is connected to the filtered slurry outlet pipe (13), figure 2.

The device allows for an automated loading and discharging as well as the regeneration of zeolite due to the fact that the filters have two opening and closing valves at their ends cooperating with the worms and the conveyor/drying belt as described.

It comprises a control unit allowing the device to be automated according to the energy demand and price as well as the signals from the water quality monitoring sensors to be interpreted with at least one pH, temperature, conductivity and ammonium/nitrate sensor, allowing the speed and temperature of the conveyor/drying belt to be controlled according to the features and the flow rate of the slurry to be processed, in addition to means for an automated opening and closing and a remote operation of the valves of the filters.

To provide clarity in the description and support the technical sufficiency, the tests carried out are provided. These have been carried out with inflow currents into the processing system with values ranging from 800 to 1000 mg/l of N-NH₄⁺, ammonium removal efficiencies of up to 98% being achieved. The inflow current corresponds to the liquid fraction of fresh slurry subjected to a solid-liquid separation process.

NH₄⁺ adsorption is carried out on natural zeolite, which is then regenerated/its capacity is increased by means of a hot air stream at a temperature ranging from 50 to 70 °C. It has been proven that it is possible to progressively increase the ammonium retention capacity of the zeolite by repeating the drying cycle up to six times. An initial adsorption capacity of 6-7 mg N-NH4/g of zeolite is obtained. This capacity increases to values of about 20 mg N-NH4/g of zeolite when the same zeolite is reused, but dried at a temperature of about 60°C and subjected to another adsorption process (up to six drying cycles).

The applied L/D ratio of the adsorption column amounts to 3.8. The retention time in said column is 1 hour. The process is carried out at room temperature.

The adsorbent material employed is natural Clinoptilolite, a natural zeolite belonging to the aluminum silicate chemical family.

It can be observed that, as the initial concentration of ammonium in the influent stream increases, the exchange capacity of the zeolite also increases.

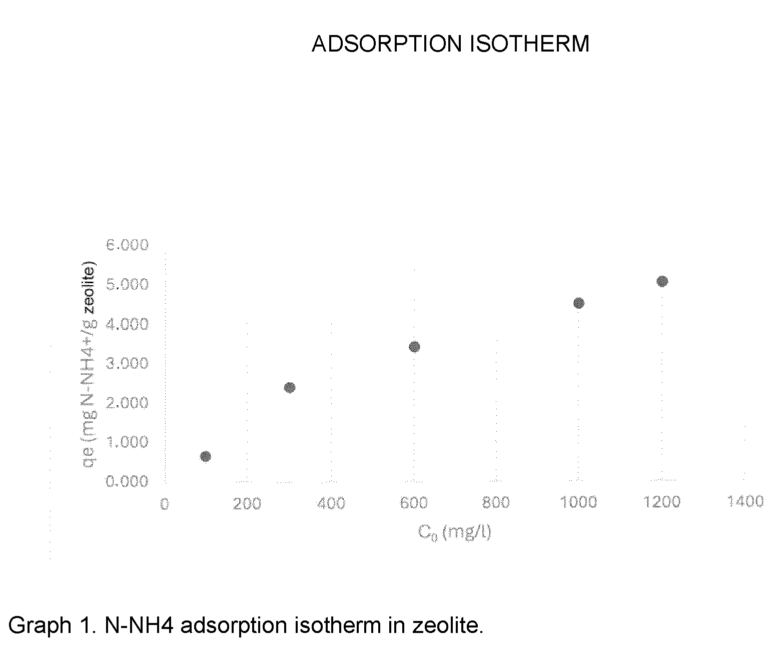

The breakthrough curve of the adsorption column shows a smooth breakthrough, so working with several columns in series allows for an optimised filtering efficiency.

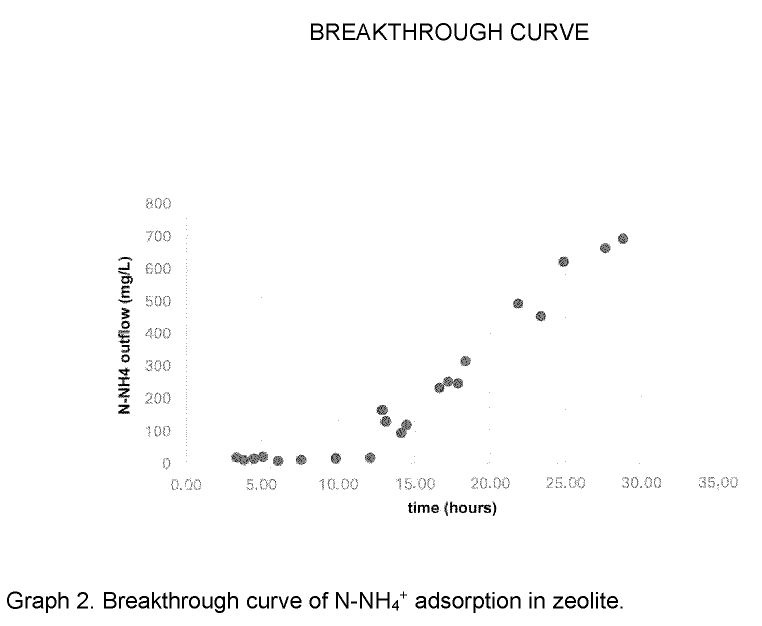

The elemental composition of the zeolite is analysed after all its cycles of use, and the following chemical composition is obtained:

**Table 1. Elemental composition of zeolite treated with slurry with several cycles of capacity increase.**

| **4.- RESULTS** | | | | | |
|---|---|---|---|---|---|
| **4.1- CHNS DETERMINATION BY MEANS OF THE INTERNAL PROCEDURE PES-ATO-01.** | | | | | |
| **Sample replica** | **Date of analysis** | **N%** | **C%** | **H%** | **S%** |
| regenerated zeolite_1 | 12/03/2024 | 0.54 | <LQ | 0.72 | <LQ |
| regenerated zeolite_2 | 12/03/2024 | 0.54 | <LQ | 0.86 | <LQ |

On the contrary, it can be observed in the elemental composition of the zeolite treated with slurry, but in this case without having undergone any regeneration cycle, that the N content of the product is lower (0.13%) than that obtained by applying regeneration cycles (0.56 %).

**Table 2. Elemental composition of zeolite treated with slurry without increasing its capacity.**

| **4.- RESULTS** | | | | | |
|---|---|---|---|---|---|
| **4.1- CHNS DETERMINATION BY MEANS OF THE INTERNAL PROCEDURE PES-ATO-01.** | | | | | |
| **Sample replica** | **Date of analysis** | **N%** | **C%** | **H%** | **S%** |
| dry zeolite_1 | 30/06/2023 | 0.16 | <LQ | 0.84 | <LQ |
| dry zeolite_2 | 30/06/2023 | 0.16 | <LQ | 0.88 | <LQ |

These results show the treatment capacity of the proposed system under the conditions described above. The invention allows for the recovery of nitrogen (and other nutrients such as K) and, therefore, its removal from waste streams, thus contributing to their treatment and, possibly, subsequent recovery.

## Claims

1. A slurry filtering device **characterised by** having automated loading and regeneration means comprising at least two zeolite filters (6), a zeolite loading worm (9) conveying the zeolite from a zeolite container (11) to a filter loading worm (5) connected to the top portion of at least two zeolite filters (6), which are loaded by these zeolite filters (6) having an opening and closing valve at their top end and which have means for discharging the zeolite through a second opening and closing valve close to their base, said zeolite loading worm (9) having a recirculating pipe (12) for the surplus load from the zeolite filters (6) downstream of the final zeolite filter (6) installed, wherein both the recirculating pipe (12) and the zeolite filters (6) discharge onto a conveyor/drying belt (8) located underneath them, the conveyor/air drying belt (8) within the range 50-70 °C discharging into a discharging and recirculating worm (10) to the zeolite container (11); it comprises a basin (1), a solid/liquid separator (3), a silo (2) for storing the liquid fraction connected by means of a slurry feed pipe (14) to the portion close to the base of a first filter and the outlet of which is realised through a pipe close to the top portion of the zeolite filter (6), at least one ion exchanger (7) installed between zeolite filters (6), the inlet of which is the upstream outlet of the zeolite filter (6) and the outlet of which is connected to the contiguous outlet downstream of the ion exchanger (7), the outlet of the last zeolite filter (6) being connected to the filtered slurry outlet pipe (13); it comprises a control unit allowing the device to be automated according to the energy demand and price as well as the signals from the water quality monitoring sensors to be interpreted with at least one pH, temperature, conductivity and ammonium/nitrate sensor, allowing the speed and temperature of the conveyor/drying belt (8) to be controlled according to the ambient and the slurry temperature and the slurry flow rate to be processed, in addition to means for an automated opening and closing and a remote operation of the valves of the zeolite filters (6).

2. The slurry filtering device according to claim 1, **characterised by** means for operating the zeolite filters (6) independently due to their having opening and closing valves in their inlet and outlet pipes as well as a separate feed inlet into their slurry feed pipes.
